# EUROPEAN PATENT APPLICATION

(11) **EP 4 819 240 A1**
(43) Date of publication of application: **07.10.2026**
(21) Application number: 24949525.0
(22) Date of filing: 31.12.2024
(51) Int. Cl.: H01M 4/505

(54) **LITHIUM NICKEL MANGANESE OXIDE POSITIVE ELECTRODE ACTIVE MATERIAL AND PREPARATION METHOD THEREFOR, POSITIVE ELECTRODE SHEET, AND BATTERY**

(30) Priority: 31.07.2024 CN 202411046827
(71) Applicant: Beijing Easpring Material Technology Co., Ltd., Beijing 100160 (CN)
(72) Inventor: ZHANG, Hongbo, Beijing 100160 (CN); ZHANG, Weining, Beijing 100160 (CN); SONG, Shunlin, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2024/144489
(87) International publication number: WO 2026/025808

(57) **Abstract**

A lithium nickel manganese oxide cathode active material, a preparation method therefor, a cathode electrode plate, and a battery. An X-ray diffraction pattern of the lithium nickel manganese oxide cathode active material satisfies: 0.13≤Iₕ/I_{w}≤0.28. I_{w}=I₍₁₁₁₎+ I₍₃₁₁₎+ I₍₄₀₀₎ and Iₕ= I₍₃₃₁₎+ I₍₅₁₁₎+ I₍₅₃₁₎, where I₍₁₁₁₎ represents a diffraction peak intensity of (111) crystal plane, I₍₃₁₁₎ represents a diffraction peak intensity of (311) crystal plane, I₍₄₀₀₎ represents a diffraction peak intensity of (400) crystal plane, I₍₃₃₁₎ represents a diffraction peak intensity of (331) crystal plane, I₍₅₁₁₎ represents a diffraction peak intensity of (511) crystal plane, and I₍₅₃₁₎ represents a diffraction peak intensity of (531) crystal plane.

## Description

### FIELD

The present disclosure relates to the field of batteries, and more particularly, to a lithium nickel manganese oxide cathode active material, a preparation method therefor, a cathode electrode plate, and a battery.

### BACKGROUND

Cathode active materials are key components of batteries, determining the energy density and cycle life of the entire battery, and also constituting the most costly portion of the battery. Spinel lithium nickel manganese oxide materials are developed on the basis of spinel lithium manganese oxide, and possess the advantages of abundant resources, environmental friendliness, and low costs. Such materials have a three-dimensional framework structure, providing stable and efficient lithium-ion transport pathways, and also have a wide operating voltage window. As a result, batteries including spinel lithium nickel manganese oxide cathode active materials exhibit high energy density and therefore have broad development prospects. However, the spinel phase exhibits crystal self-limitation. Conventional spinel lithium nickel manganese oxide has a regular octahedral structure with distinct edges and corners. The sharp octahedral tips are easily crushed during rolling, posing a risk of puncturing aluminum foil during battery cell fabrication. In addition, this material suffers from the Jahn-Teller effect. Mn³⁺ tends to dissolve at the tips, which is detrimental to the electrochemical performance of the battery.

### SUMMARY

The present disclosure provides a lithium nickel manganese oxide cathode active material. An X-ray diffraction pattern of the lithium nickel manganese oxide cathode active material satisfies: 0.13≤Iₕ/I_{w}≤0.28. I_{w}=I₍₁₁₁₎+ I₍₃₁₁₎+ I₍₄₀₀₎ and Iₕ= I₍₃₃₁₎+ I₍₅₁₁₎+ I₍₅₃₁₎, where I₍₁₁₁₎ represents a diffraction peak intensity of (111) crystal plane, I₍₃₁₁₎ represents a diffraction peak intensity of (311) crystal plane, I₍₄₀₀₎ represents a diffraction peak intensity of (400) crystal plane, I₍₃₃₁₎ represents a diffraction peak intensity of (331) crystal plane, I₍₅₁₁₎ represents a diffraction peak intensity of (511) crystal plane, and I₍₅₃₁₎ represents a diffraction peak intensity of (531) crystal plane. Accordingly, the lithium nickel manganese oxide cathode active material provided in the present disclosure is single-crystal lithium nickel manganese oxide particles of a mixed-type including spherical particles and truncated octahedral particles. Compared with solely spherical single-crystal lithium nickel manganese oxide or solely truncated octahedral single-crystal lithium nickel manganese oxide, the presence of spherical single-crystal particles can reduce the risk of fracture and puncturing aluminum foil during rolling of the lithium nickel manganese oxide, thereby increasing the compaction density of the cathode electrode plate and improving the energy density of the battery. The presence of truncated octahedral particles can further reduce the probability of Mn³⁺ dissolution in the lithium nickel manganese oxide, while exposing the (111) crystal plane, (100) crystal plane, and/or (110) crystal plane, thereby improving the energy density and cycle performance of the battery.

According to some embodiments of the present disclosure, a proportion n of spherical particles in the lithium nickel manganese oxide cathode active material satisfies 10%≤n≤40% and a roundness R of the spherical particles satisfies 0.75≤R≤1. Accordingly, the risk of fracture and puncturing aluminum foil during rolling of the lithium nickel manganese oxide is reduced, thereby increasing the compaction density of lithium nickel manganese oxide powder and improving the energy density of the battery.

According to some embodiments of the present disclosure, the lithium nickel manganese oxide cathode active material satisfies at least one of the following conditions: 0.9≤R≤1 and 15%≤n≤25%. Accordingly, the roundness of the spherical single-crystal particles is improved, thereby improving and the compaction density of the lithium nickel manganese oxide powder. In addition, the proportion of spherical single-crystal particles is reduced, thereby reducing the hardness of the lithium nickel manganese oxide material and lowering the processing costs of crushing.

According to some embodiments of the present disclosure, the lithium nickel manganese oxide cathode active material includes Li₍₁₊ₐ₎(Ni_{0.5}Mn_{1.5})_{(1-a-b-c)}M_{b}N_{c}O₄, where -0.3≤a≤0.3, 0<b≤0.002, and 0≤c≤0.003. M includes at least one of B, W, P, Nb, Mo, Ta, Si, or Ce. N includes at least one of Y, Cr, or Co. Accordingly, element M and element N are doped into the lithium nickel manganese oxide material, and both element M and element N affect the morphology of lithium nickel manganese oxide cathode material particles. Element M can promote formation of spherical particle morphology in the lithium nickel manganese oxide, and element N can promote formation of truncated corner/edge octahedral particle morphology in the lithium nickel manganese oxide, thereby improving the energy density and cycle performance of the battery.

According to some embodiments of the present disclosure, the lithium nickel manganese oxide cathode active material satisfies at least one of the following conditions: M includes at least one of B or Nb; and N includes Y. Accordingly, mixed-type single-crystal lithium nickel manganese oxide particles including spherical particles and truncated octahedral particles are obtained, thereby improving the energy density and cycle performance of the battery.

According to some embodiments of the present disclosure, the lithium nickel manganese oxide cathode active material satisfies at least one of the following conditions: 0.0003≤b≤0.001; and 0.0005≤c≤0.0015 and c>b.

According to some embodiments of the present disclosure, the lithium nickel manganese oxide cathode active material has a compaction density ranging from 2.9 g/cm³ to 3.4 g/cm³, optionally ranging from 3.1 g/cm³ to 3.3 g/cm³. Accordingly, the compaction density of the cathode electrode plate of the battery is improved, and the energy density of the battery is enhanced.

A second aspect of the present disclosure provides a method for preparing the lithium nickel manganese oxide cathode active material. The method includes: mixing a nickel source, a manganese source, a lithium source, an M source, and an N source in a stoichiometric ratio to obtain a mixture; heating the mixture to a first temperature for sintering, cooling the mixture to a second temperature for annealing, and cooling to obtain bulk lithium nickel manganese oxide; and crushing the bulk lithium nickel manganese oxide. Accordingly, by doping element M and element N during preparation of the lithium nickel manganese oxide, uniformly dense large single-crystal particles are obtained through constant-temperature sintering, followed by annealing to repair defects generated during the reaction process of the lithium nickel manganese oxide, thereby forming mixed-type single-crystal lithium nickel manganese oxide particles including spherical particles and truncated octahedral particles. As a result, while improving the compaction density of the material and enhancing the energy density and cycle performance of the battery, the hardness of the single-crystal lithium nickel manganese oxide particles is reduced, thereby lowering the process costs of subsequent crushing.

According to some embodiments of the present disclosure, the method further includes mixing a nickel-manganese precursor, the lithium source, the M source, and the N source in a stoichiometric ratio. Accordingly, the uniformity of distribution of element N in the single-crystal lithium nickel manganese oxide particles is improved, and element segregation is reduced.

According to some embodiments of the present disclosure, a first temperature T₁ and a second temperature T₂ satisfy 250°C≤T₁-T₂ ≤500°C.

According to some embodiments of the present disclosure, the method satisfies at least one of the following conditions: 850°C≤T₁≤1100°C; and 600°C≤T₂ ≤800°C. Accordingly, by controlling the constant-temperature sintering temperature within the above-described range, more uniformly dense large single-crystal particles can be obtained. By controlling the annealing temperature within the above-described range, defects generated during the reaction process of the lithium nickel manganese oxide can be repaired, and the content of Mn³⁺ can be regulated, thereby reducing the generation of oxygen vacancies and further improving the cycle performance of the battery.

According to some embodiments of the present disclosure, a cooling rate from the first temperature to the second temperature ranges from 1°C/min to 4°C/min. Accordingly, by controlling the cooling rate within the above-described range, the content of Mn³⁺ can be reduced and the repair effect on the surface of the lithium nickel manganese oxide cathode active material can be improved, while also reducing process costs.

According to some embodiments of the present disclosure, a holding time t₁ at the first temperature and a holding time t₂ at the second temperature satisfy at least one of the following conditions: 6 h≤t₁≤12 h, optionally 8 h≤t₁≤10 h; or 2 h≤t₂≤6 h, optionally 3.5 h≤t₂≤4 h. Accordingly, by controlling the holding time for the constant-temperature sintering temperature within the above-described range, more uniformly dense large single-crystal particles can be obtained. By controlling the holding time for annealing within the above-described range, defects generated during the reaction process of the lithium nickel manganese oxide can be repaired, and the content of Mn³⁺ can be regulated, thereby reducing the generation of oxygen vacancies and further improving the cycle performance of the battery.

According to some embodiments of the present disclosure, the sintering and the annealing are each performed independently in air or in an oxygen atmosphere. Accordingly, the process costs are lowered.

According to some embodiments of the present disclosure, the sintering is performed in an oxygen atmosphere. Accordingly, the lithium source reacts fully with other raw materials, making it easier to obtain the mixed-type single-crystal lithium nickel manganese oxide particle including spherical particles and truncated octahedral particles.

According to some embodiments of the present disclosure, the nickel-manganese precursor satisfies at least one of the following conditions: 3 µm≤Dv50≤5 µm, where Dv50 represents a volume average particle size of nickel-manganese precursor particles; or 0.8≤(Dv90-Dv10)/Dv50≤1.2, where Dv10 represents a particle size corresponding to 10% of cumulative volume distribution of particles of the nickel-manganese precursor, and Dv90 represents a particle size corresponding to 90% of cumulative volume distribution of particles of the nickel-manganese precursor. Accordingly, the nickel-manganese precursor has a narrow particle size distribution, thereby improving the uniformity of the lithium nickel manganese oxide single-crystal particles.

A third aspect of the present disclosure provides a cathode electrode plate including the lithium nickel manganese oxide cathode active material provided in the first aspect of the present disclosure. Accordingly, the compaction density of the cathode electrode plate is improved, and the energy density of the battery is enhanced.

A fourth aspect of the present disclosure provides a battery including the cathode electrode plate provided in the third aspect of the present disclosure.

### BRIEF DESCRIPTION OF THE DRAWINGS

The above and/or additional aspects and advantages of the present disclosure will become apparent and readily understood from the following description of embodiments taken in conjunction with the accompanying drawings.
FIG. 1 shows a schematic flowchart of a method for preparing a lithium nickel manganese oxide material according to an embodiment of the present disclosure.
FIG. 2 shows an SEM image of the lithium nickel manganese oxide material prepared in Example 11 of the present disclosure.
FIG. 3 shows an SEM image of the lithium nickel manganese oxide material prepared in Example 3 of the present disclosure.
FIG. 4 shows an SEM image of the lithium nickel manganese oxide material prepared in Example 9 of the present disclosure.
FIG. 5 shows an SEM image of the lithium nickel manganese oxide material prepared in Comparative Example 1 of the present disclosure.
FIG. 6 shows an XRD pattern of the lithium nickel manganese oxide material prepared in Example 11 of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

A first aspect of the present disclosure provides a lithium nickel manganese oxide cathode active material. An X-ray diffraction pattern of the lithium nickel manganese oxide cathode active material satisfies: $0.13 \leq {I}_{h} / {I}_{w} \leq 0.28 .$

I_{w}=I₍₁₁₁₎+ I₍₃₁₁₎+ I₍₄₀₀₎ and Iₕ= I₍₃₃₁₎+ I₍₅₁₁₎+ I₍₅₃₁₎, where I₍₁₁₁₎ represents a diffraction peak intensity of (111) crystal plane, I₍₃₁₁₎ represents a diffraction peak intensity of (311) crystal plane, I₍₄₀₀₎ represents a diffraction peak intensity of (400) crystal plane, I₍₃₃₁₎ represents a diffraction peak intensity of (331) crystal plane, I₍₅₁₁₎ represents a diffraction peak intensity of (511) crystal plane, and I₍₅₃₁₎ represents a diffraction peak intensity of (531) crystal plane. Specifically, the (111) crystal plane, the (311) crystal plane, and the (400) crystal plane are low-index energy crystal planes, while the (331) crystal plane, the (511) crystal planes, and the (531) crystal planes are high-index energy crystal planes. Conventional spinel lithium nickel manganese oxide has a regular octahedral structure with distinct edges and corners, with the (111) crystal plane completely exposed.

In the present disclosure, by controlling the ratio of Iₕ to I_{w} within the above-described range, the proportion of spherical particles in the mixed-type lithium nickel manganese oxide particles is increased, thereby reducing the risk of fracture and puncturing aluminum foil during rolling of the lithium nickel manganese oxide, increasing the compaction density of the cathode electrode plate, and improving the energy density of the battery. In addition, the presence of truncated octahedral particles can further reduce the probability of Mn³⁺ dissolution in the lithium nickel manganese oxide, while exposing the (111) crystal plane, (100) crystal plane, and/or (110) crystal plane. The (111) crystal plane has low surface energy, which is conducive to the cycle performance of the battery. If the ratio of Iₕ to I_{w} is too small, the number of spherical particles in the mixed-type lithium nickel manganese oxide is too low, thereby increasing the risk of the material puncturing the aluminum foil during rolling. If the ratio of Iₕ to I_{w} is too large, the hardness of the mixed-type lithium nickel manganese oxide particles is too high, making them difficult to crush and dissociate, thereby increasing process costs of crushing.

In the present disclosure, the X-ray diffraction spectrum of the lithium nickel manganese oxide cathode active material is measured using an XRD 6000 X-ray powder diffractometer (Shimadzu, Japan). The XRD test conditions are as follows: Cu target, Kα radiation (wavelength λ = 0.154 nm), tube voltage of 40 kV, tube current of 200 mA, and a scanning rate of 10°(2θ)/min.

As an example, Iₕ/I_{w} may be 0.13, 0.15, 0.17, 0.19, 0.21, 0.23, 0.25, or 0.28, or may be within a range composed of any of the above-described values.

According to some embodiments of the present disclosure, a proportion n of spherical particles in the lithium nickel manganese oxide cathode active material satisfies 10%≤n≤40% and a roundness R of the spherical particles satisfies 0.75≤R≤1. In other words, the spherical particles refer to particles with a roundness R satisfying 0.75≤R≤1. By controlling the portion of spherical particles within the above-described range, the risk of fracture and puncturing aluminum foil during rolling of the particles is reduced, while the hardness of the lithium nickel manganese oxide particles can also be reduced, thereby facilitating crushing and reducing crushing costs.

In the present disclosure, R may be measured using a scanning electron microscope (SEM). Specifically, in an SEM image, the length of the longest diagonal of a single-crystal particle is defined asR₁, and the equivalent circular diameter corresponding to the area of a single-crystal particle is defined as R₂. R=R₁/R₂. The value of R closer to 1 indicates more rounded and regular the morphology of the spherical particle.

As an example, R may be 0.75, 0.8, 0.85, 0.9, 0.95, or 1, or may be within a range composed of any of the above-described values. Accordingly, the roundness of the spherical particles is improved, thereby reducing the risk of fracture and puncturing aluminum foil during rolling of the particles, increasing the compaction density of the cathode electrode plate, and improving the energy density of the battery. According to some specific embodiments of the present disclosure, 0.9≤R≤1.

As an example, n may be 10%, 15%, 20%, 25%, 30%, 35%, or 40%, or may be within a range composed of any of the above-described values. According to some specific embodiments of the present disclosure, 15%≤n≤25%. Accordingly, the lithium nickel manganese oxide particles having both high powder compaction density and moderate hardness are obtained.

In the present disclosure, the proportion n of the spherical particles may be measured by SEM. Specifically, n is a ratio of the number of spherical particles to the total number of particles identified in an SEM image.

It should be noted that, in the present disclosure, the statistical count of spherical particles includes both independently existing spherical particles not bonded to other particles and spherical particles adhered to other particles.

According to some embodiments of the present disclosure, the lithium nickel manganese oxide cathode active material includes Li₍₁₊ₐ₎(Ni_{0.5}Mn_{1.5})_{(1-a-b-c)}M_{b}N_{c}O₄, where -0.3≤a≤0.3, 0<b≤0.002, and 0≤c≤0.003. M includes at least one of B, W, P, Nb, Mo, Ta, Si, or Ce. N includes at least one of Y, Cr, or Co. Accordingly, the doped element M exhibits a fluxing effect, which can reduce the surface energy of high-index crystal planes and form a plurality of high-index crystal planes on the surface of the lithium nickel manganese oxide particles, thereby rendering the particles polyhedral. After prolonged heat preservation at high temperature, fusion occurs between the crystal planes, thereby obtaining spherical lithium nickel manganese oxide particles and further reducing the risk of fracture and puncturing of aluminum foil during rolling of the lithium nickel manganese oxide particles. The N-O bond formed between element N and element O has higher bond energy, which can reduce the surface energy of Li⁺-dominant (100) and (110) crystal planes, thereby achieving a particle truncation effect. Specifically, the apexes of the octahedron are truncated to expose the (100) crystal plane (corresponding to the (400) crystal plane in the XRD pattern), and the edges of the octahedron are cut to expose the (110) crystal plane (corresponding to the (310) crystal plane in the XRD pattern), thereby forming truncated octahedral particles. In addition, the doped element N occupies part of the trivalent manganese sites, thereby reducing the content of Mn³⁺ in the lithium nickel manganese oxide. As a result, the probability of disproportionation of Mn³⁺ into Mn²⁺ can be lowered, thereby reducing the content of Mn²⁺, which can further improve the cycle stability of the lithium nickel manganese oxide.

As an example, a may be -0.3, -0.25, -0.15, -0.1, -0.05, 0.05, 0.1, 0.15, 0.2, 0.25, or 0.3, or may be within a range composed of any of the above-described values.

As an example, b may be 0.0002, 0.0005, 0.001, 0.0015, or 0.002, or may be within a range composed of any of the above-described values. According to some specific embodiments of the present disclosure, 0.0003≤b≤0.001. Accordingly, by doping the lithium nickel manganese oxide with element M at the above-described content, the number of spherical particles in the lithium nickel manganese oxide is increased, thereby reducing the risk of fracture and puncturing the aluminum foil during rolling of the lithium nickel manganese oxide particles.

As an example, c may be 0, 0.0003, 0.0005, 0.001, 0.002, or 0.003, or may be within a range composed of any of the above-described values. According to some specific embodiments of the present disclosure, 0.0005≤c≤0.0015 and c>b. Accordingly, by doping the lithium nickel manganese oxide with element N at the above-described content, truncated octahedral lithium nickel manganese oxide particles are formed, thereby improving the cycle performance of the battery. By controlling c>b, the doping effect of element N can be dominant, which is conducive to specific capacity.

According to some embodiments of the present disclosure, M includes at least one of B and Nb. Accordingly, during formation of the lithium nickel manganese oxide, fusion of primary particles is promoted and the surface energy of high-index crystal planes is reduced.

According to some embodiments of the present disclosure, M includes element Y.

According to some embodiments of the present disclosure, the lithium nickel manganese oxide cathode active material may have a compaction density ranging from 2.9 g/cm³ to 3.4 g/cm³, for example,2.9 g/cm³, 3 g/cm³, 3.1 g/cm³, 3.2 g/cm³, 3.3 g/cm³, or 3.4 g/cm³, or may be within a range composed of any of the above-described values. Accordingly, after the lithium nickel manganese oxide cathode active material is coated on the cathode electrode plate, the compaction density of the cathode electrode plate can be improved and the energy density of the battery can be increased. According to some specific embodiments of the present disclosure, the compaction density of the lithium nickel manganese oxide cathode active material may range from 3.1 g/cm³ to 3.3 g/cm³.

In the present disclosure, the compaction density of the lithium nickel manganese oxide cathode active material may be measured using a BT-30 tap density tester from Bettersize Instruments Ltd.

A second aspect of the present disclosure provides a method for preparing the lithium nickel manganese oxide cathode active material provided in the first aspect of the present disclosure. The method includes: mixing a nickel source, a manganese source, a lithium source, an M source, and an N source in a stoichiometric ratio to obtain a mixture; heating the mixture to a first temperature for sintering, cooling the mixture to a second temperature for annealing, and cooling to obtain bulk lithium nickel manganese oxide; and crushing the bulk lithium nickel manganese oxide.

In the present disclosure, during preparation of the lithium nickel manganese oxide, element M and element N are doped. On the one hand, the doped element M exhibits a fluxing effect, which can promote fusion of primary particles during formation of the lithium nickel manganese oxide. In addition, the doped element M can effectively reduce the surface energy of high-index crystal planes and form a plurality of high-index crystal planes on the surface of lithium nickel manganese oxide particles, thereby rendering the particles polyhedral. After prolonged heat preservation at high temperature, fusion occurs between the crystal planes, thereby achieving a spheroidization effect. The doped element N is uniformly distributed in the crystal structure of the lithium nickel manganese oxide. The N-O bond formed between element N and element O has higher bond energy, which can reduce the surface energy of Li⁺-dominant (100) and (110) crystal planes, thereby achieving a particle truncation effect. Specifically, the apexes of the octahedron are truncated to expose the (100) crystal plane (corresponding to the (400) crystal plane in the XRD pattern), and the edges of the octahedron are cut to expose the (110) crystal plane (corresponding to the (310) crystal plane in the XRD pattern), thereby forming truncated octahedral particles. In addition, the doped element N occupies part of the trivalent manganese sites, thereby reducing the content of Mn³⁺ in the lithium nickel manganese oxide. As a result, the probability of disproportionation of Mn³⁺ into Mn²⁺ can be lowered, thereby reducing the content of Mn²⁺, which can further improve the cycle stability of the lithium nickel manganese oxide. On the other hand, after formation of the lithium nickel manganese oxide doped with element M and element N, annealing is performed. The annealing process can repair defects generated during the reaction process of the lithium nickel manganese oxide, regulate the content of Mn³⁺, and reduce the generation of oxygen vacancies, thereby further improving cycle performance.

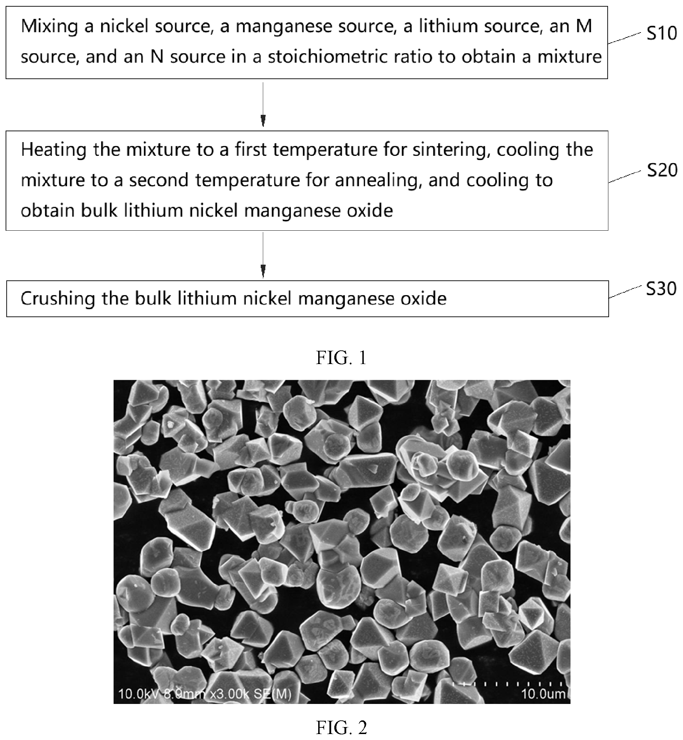

The method provided in the present disclosure is described in detail below. With reference to FIG. 1, the method includes the following steps.

S10: Mixing a nickel source, a manganese source, a lithium source, an M source, and an N source in a stoichiometric ratio to obtain a mixture

According to some embodiments of the present disclosure, a nickel source, a manganese source, a lithium source, an M source, and an N source are weighed in a stoichiometric ratio and placed in a high-speed mixer for mixing to obtain a mixture.

According to some embodiments of the present disclosure, a nickel-manganese precursor, the lithium source, the M source, and the N source are mixed in a stoichiometric ratio.

As an example, the M source includes an M-containing compound. For example, when M is element B, the M source may be boric acid. When M is element Nb, the M source may be Nb₂O₅.

As an example, the N source includes an N-containing compound. For example, when N is element Y, the N source may be yttrium oxide.

According to some embodiments of the present disclosure, a volume average particle size Dv50 of nickel-manganese precursor particles satisfies: 3 µm≤Dv50≤5 µm. For example, it may be 3 µm, 3.5 µm, 4 µm, 4.5 µm, or 5 µm, or may be within a range composed of any of the above-described values. Accordingly, the nickel-manganese precursor has a narrow particle size distribution, which can improve the uniformity of the lithium nickel manganese oxide single-crystal particles.

According to some embodiments of the present disclosure, Dv10, Dv50, and Dv90 of the nickel-manganese precursor satisfy: 0.8≤(Dv90-Dv10)/Dv50≤1.2, where Dv10 represents a particle size corresponding to 10% of cumulative volume distribution of particles of the nickel-manganese precursor, and Dv90 represents a particle size corresponding to 90% of cumulative volume distribution of particles of the nickel-manganese precursor. For example, (Dv90-Dv10)/Dv50 may be 0.8, 0.9, 1.0, 1.1, or 1.2, or may be within a range composed of any of the above-described values. Accordingly, the nickel-manganese precursor has a narrow particle size distribution, which can improve the uniformity of the lithium nickel manganese oxide single-crystal particles.

In the present disclosure, Dv10, Dv50, and Dv90 of the nickel-manganese precursor may be measured by a Hydro 3000mu laser particle size analyzer from Marvern.

S20: Heating the mixture to a first temperature for sintering, cooling the mixture to a second temperature for annealing, and cooling to obtain bulk lithium nickel manganese oxide

According to some embodiments of the present disclosure, the mixture is heated from room temperature to a first temperature and held at this temperature for a certain period of time. Then, the mixture is cooled naturally to a second temperature for annealing, held at this temperature for a certain period of time, and cooled to room temperature to obtain bulk lithium nickel manganese oxide.

According to some embodiments of the present disclosure, a duration for heating from the room temperature to the first temperature may range from 2 h to 9 h. For example, it may be 2 h, 4 h, 6 h, 8 h, or 9 h, or may be within a range composed of any of the above-described values. According to some specific embodiments of the present disclosure, the duration for heating from the room temperature to the first temperature may range from 2 h to 4 h. Accordingly, the lithium source is fully melted to rapidly complete the synthesis reaction of the lithium nickel manganese oxide.

According to some embodiments of the present disclosure, the heating from the room temperature to the first temperature may be performed in air or in an oxygen atmosphere.

According to some embodiments of the present disclosure, the heating from the room temperature to the first temperature may be performed in an oxygen atmosphere. Accordingly, the melting rate of the lithium source is increased and the reaction rate for the formation of lithium nickel manganese oxide crystals from the nickel source, manganese source, lithium source, M source, and N source is improved.

According to some embodiments of the present disclosure, a first temperature T₁ satisfies 850°C≤T₁≤1100°C. For example, T₁ may be 850°C, 900°C, 950°C, 1000°C, 1050°C, or 1100°C, or may be within a range composed of any of the above-described values.

According to some embodiments of the present disclosure, a holding time t₁ at the first temperature for constant-temperature sintering may satisfy 6h≤t₁≤12 h. For example, t₁ may be 6 h, 8 h, 10 h, or 12 h, or may be within a range composed of any of the above-described values. According to some specific embodiments of the present disclosure, 8h≤t₁≤10h.

Accordingly, by controlling the constant-temperature sintering temperature and the holding time within the above-described range, uniformly dense large single-crystal particles can be obtained.

According to some embodiments of the present disclosure, the constant-temperature sintering may be performed in air or in an oxygen atmosphere.

According to some specific embodiments of the present disclosure, the constant-temperature sintering may be performed in air. Accordingly, the reaction costs are reduced.

According to some embodiments of the present disclosure, a second temperature T₂ satisfies 250°C≤T₁-T₂≤500°C. For example, T₁-T₂ may be 250°C, 300°C, 350°C, 400°C, 450°C, or 500°C, or may be within a range composed of any of the above-described values.

According to some embodiments of the present disclosure, a cooling rate from the first temperature to the second temperature ranges from 1°C/min to 4°C/min. For example, it may be 1°C/min, 1.5°C/min, 2°C/min, 2.5°C/min, 3°C/min, 3.5°C/min, or 4°C/min, or may be within a range composed of any of the above-described values. Accordingly, by controlling the cooling rate within the above-described range, the content of Mn³⁺ can be reduced and the repair effect on the surface of the lithium nickel manganese oxide cathode active material can be improved, while also reducing process costs.

According to some embodiments of the present disclosure, a cooling time from the first temperature to the second temperature may range from 1 h to 5 h. For example, it may be 1 h, 2 h, 3 h, 4 h, or 5 h, or may be within a range composed of any of the above-described values.

According to some embodiments of the present disclosure, the cooling may be performed in air or in an oxygen atmosphere.

According to some specific embodiments of the present disclosure, the cooling may be performed in air. Accordingly, the reaction costs are reduced.

According to some embodiments of the present disclosure, 600°C≤T₂≤800°C. For example, T₂ may be 600°C, 650°C, 700°C, 750°C, or 800°C, or may be within a range composed of any of the above-described values.

According to some embodiments of the present disclosure, a holding time t₂ at the second temperature for annealing may satisfy 2h≤t₂≤6h. For example, t₂ may be 2 h, 3 h, 4 h, 5 h, or 6 h, or may be within a range composed of any of the above-described values. According to some specific embodiments of the present disclosure, 3.5h≤t₂≤4h.

Accordingly, by controlling the annealing temperature and holding time within the above-described range, defects generated during the reaction process of the lithium nickel manganese oxide can be repaired, and the content of Mn³⁺ can be regulated, thereby reducing the generation of oxygen vacancies and further improving the cycle performance of the battery.

According to some embodiments of the present disclosure, the annealing may be performed in air or in an oxygen atmosphere.

According to some specific embodiments of the present disclosure, the annealing may be performed in air. Accordingly, the reaction costs are reduced.

S30: Crushing the bulk lithium nickel manganese oxide

According to some embodiments of the present disclosure, the resulting bulk lithium nickel manganese oxide product is crushed and dissociated to obtain powdered spinel lithium manganese oxide.

In summary, the lithium nickel manganese oxide cathode active material and the preparation method thereof provided in the present disclosure have the following advantages:
(1) The lithium nickel manganese oxide cathode active material provided in the present disclosure is mixed-type particles including spherical particles and truncated octahedral particles. Compared with a single-type particle, a battery using the mixed-type particles as the cathode active material can reduce the risk of puncturing aluminum foil during the preparation process, increase the compaction density of the cathode electrode plate, and thereby improve the energy density and safety of the battery.
(2) In the present disclosure, single-crystal particles having two mixed morphologies can be obtained through a single sintering process. Compared with a method in which spherical particles and truncated octahedral particles are separately prepared and then mixed, the process is simpler and can significantly reduce production costs.
(3) In the synthesis process of the present disclosure, an oxygen atmosphere is used during the heating stage, which can accelerate the melting rate of lithium salt and rapidly complete the synthesis reaction of the lithium nickel manganese oxide. In addition, the oxygen atmosphere can also promote more sufficient reactions between Li and other raw materials, making it easier to obtain spheroidized and octahedrally truncated morphologies.
(4) In the synthesis process of the present disclosure, during the cooling stage and annealing stage, through slow cooling and medium-temperature annealing, defects generated during the reaction process of the lithium nickel manganese oxide can be repaired, and the content of Mn³⁺ can be regulated, thereby reducing the generation of oxygen vacancies and further improving the cycle performance of the battery.
(5) In the synthesis process of the present disclosure, the constant-temperature sintering stage, cooling stage, and constant-temperature annealing stage are all performed in air, which can significantly reduce production costs.

A third aspect of the present disclosure provides a cathode electrode plate. The cathode electrode plate includes the lithium nickel manganese oxide cathode active material provided in the first aspect of the present disclosure or the lithium nickel manganese oxide cathode active material prepared by the method provided in the second aspect of the present disclosure. Accordingly, the compaction density of the cathode electrode plate can be increased while reducing the risk of the cathode active material puncturing aluminum foil, thereby improving the energy density and safety of the battery.

A fourth aspect of the present disclosure provides a battery including the cathode electrode plate provided in the third aspect of the present disclosure. Accordingly, the battery exhibits high energy density and excellent cycle performance.

It should be noted that the shape of the battery in the present disclosure is not particularly limited and may include at least one of a pouch battery, a cylindrical battery, a button battery, and an aluminum-cased prismatic battery.

Although the embodiments of the present disclosure have been illustrated and described above, it will be understood that the above embodiments are exemplary only and should not be construed as limiting the scope of the invention. Those skilled in the art may make changes, modifications, substitutions, and variations to the described embodiments without departing from the scope of the present disclosure.

### Example 1

1. A nickel-manganese precursor (with a mass ratio of Ni to Mn of 25:75), lithium carbonate, yttrium oxide, and boric acid were weighed according to an elemental molar ratio and added into a high-speed mixer for mixing to obtain a mixture. The nickel-manganese precursor had a Dv10 of 3.17 µm, a Dv50 of 4.61 µm, and a Dv90 of 6.94 µm.
2. The mixture was added into an Al₂O₃ sagger, heated to a first temperature T₁ of 970°C in an oxygen atmosphere, and subjected to constant-temperature sintering in an oxygen atmosphere for a sintering time t₁ of 10 h. Then, the mixture was cooled in air at a cooling rate of 2°C/min to T₂ of 500°C and subjected to annealing for an annealing time t₂ of 4 h, followed by cooling to room temperature in air.
3. The mixture was crushed to obtain Li(Ni_{0.5}Mn_{1.5})_{0.998}B_{0.0008}Y_{0.0012}O₄.
4. Preparation of Cathode Electrode Plate

Li(Ni_{0.5}Mn_{1.5})_{0.998}B_{0.0008}Y_{0.0012}O₄, conductive carbon black, and polyvinylidene fluoride (PVDF) were thoroughly mixed at a mass ratio of 95%:2.5%:2.5%, and homogenized with an appropriate amount of N-methylpyrrolidone (NMP). The slurry was coated onto aluminum foil and placed in a vacuum drying oven for drying at 120°C for 12 h. After drying, the material was punched and press-molded under a pressure of 100 MPa to obtain a cathode electrode plate with a diameter of 15.8 mm, a thickness of 3.2 mm, and an areal density of 147.4 g/m².

### 5. Preparation of Anode Electrode Plate

A metallic lithium sheet with a diameter of 15.8 mm and a thickness of 1 mm was used.

### 6. Separator

A polypropylene microporous membrane (Celgard 2325) with a thickness of 25 µm was used.

### 7. Preparation of Electrolyte

A mixed solution containing 1 mol/L LiPF₆, ethylene carbonate (EC), and diethyl carbonate (DEC) in equal amounts was used as the electrolyte.

### 8. Preparation of Button Battery

Assembly was carried out in a glove box under an argon atmosphere. In the glove box, the moisture and oxygen contents were less than 5 ppm. The cathode electrode plate, separator, anode electrode sheet, and electrolyte were assembled into a CR2032 button battery, followed by standing for 6 h.

The methods for preparing lithium nickel manganese oxide materials in Examples 2 to 17 and Comparative Example 1 were the same as in Example 1, with differences detailed in Table 1.

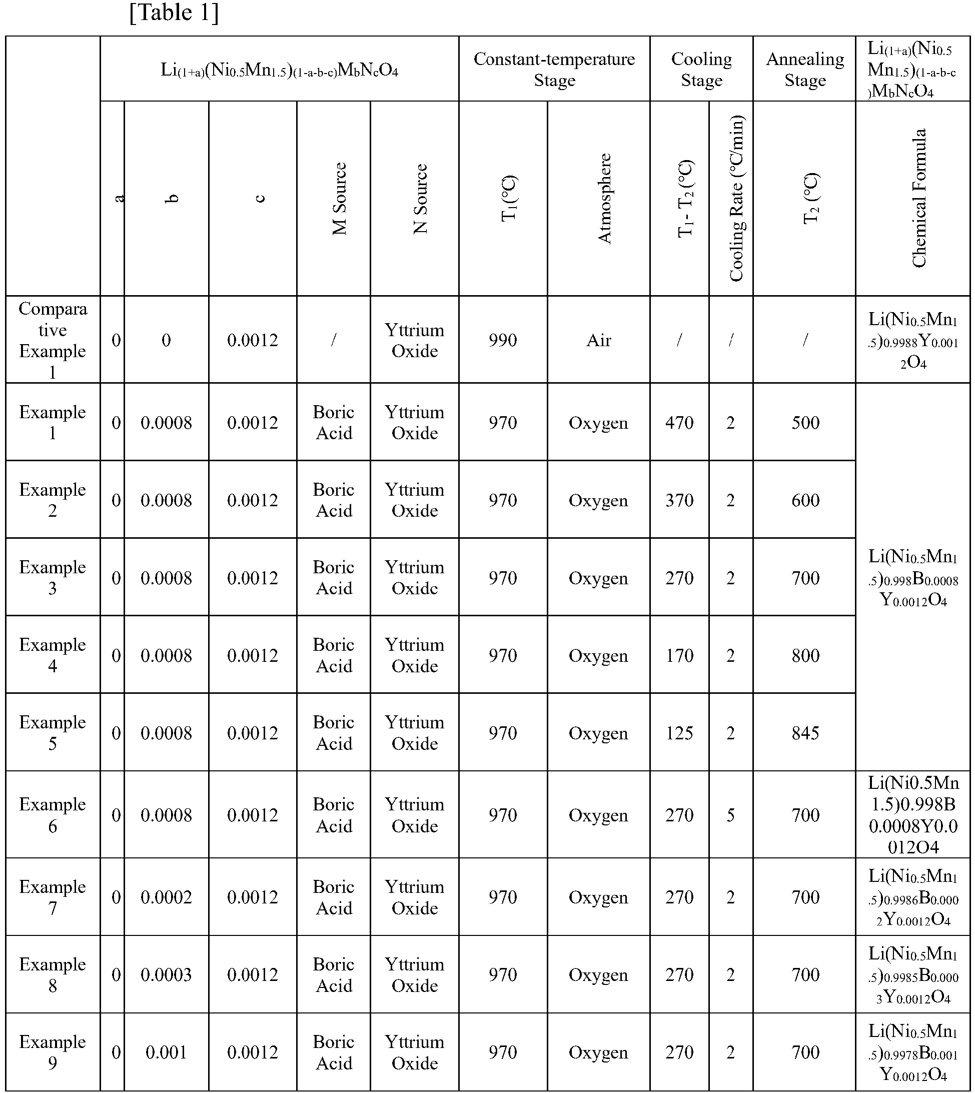

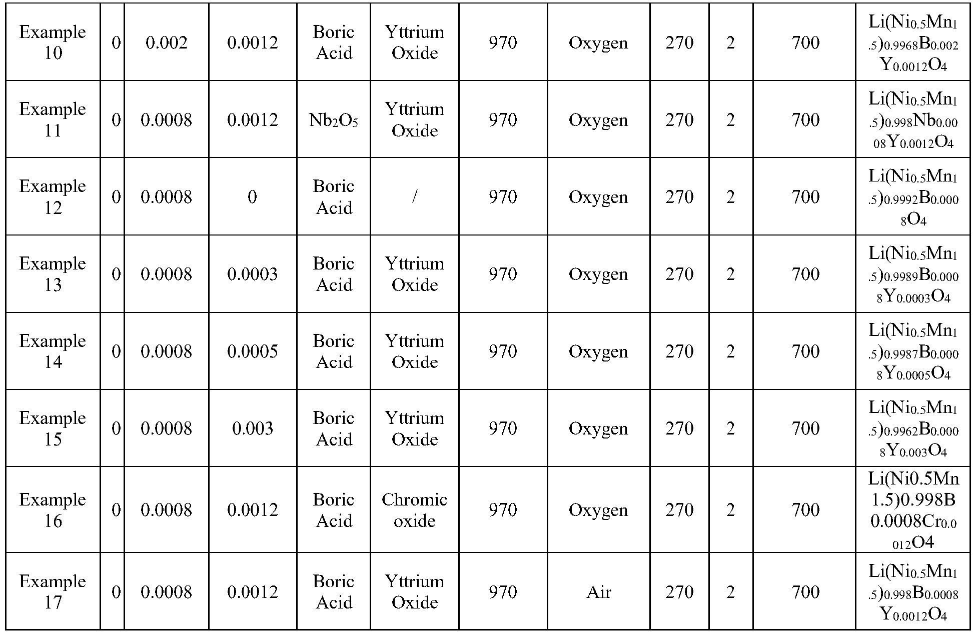

### Performance Tests

### 1. Morphology Test

Testing was performed using an S4800 scanning electron microscope (HITACHI, Japan). The roundness R was determined from SEM images.

### 2. Compacted Density of Powder

Testing was performed using a BT-30 tap density tester from Bettersize Instruments Ltd.

### 3. Discharge Specific Capacity

Electrochemical performance tests of the CR2032 button batteries were carried out using a battery testing system (Neware Technology Limited, Shenzhen). The button battery had a voltage window ranging from 3.5 V to 4.95 V and a nominal specific capacity of 120 mAh/g. After constant-current/constant-voltage charging and complete discharging at a 0.1C current rate, the initial discharge specific capacity at 0.1C, denoted as C₀, was recorded.

### 4. Capacity Retention Rate

Electrochemical performance tests of the CR2032 button batteries were carried out using a battery testing system (Neware Technology Limited, Shenzhen). The button battery had a voltage window ranging from 3.5 V to 4.95 V and a nominal specific capacity of 120 mAh/g. After two cycles of constant-current/constant-voltage charging and complete discharging at a 0.1C current rate, the battery was charged at a constant current and a constant voltage and completely discharged at a 1C current rate. The discharge specific capacity of the first cycle, denoted as C₁, was recorded. After an additional 100 cycles, the discharge specific capacity, denoted as C₁₀₀, was recorded. The capacity retention rate was calculated according to C₁₀₀/C₁×100%, and the cycling performance was evaluated based on the capacity retention rate.

### 5. Proportion of Mn³⁺

Electrochemical performance tests of the CR2032 button batteries were carried out using a battery testing system (Neware Technology Limited, Shenzhen). The button battery had a voltage window ranging from 3.5 V to 4.95 V and a nominal specific capacity of 120 mAh/g. After constant-current/constant-voltage charging and complete discharging at a 0.1C current rate, an initial charge-discharge curve was plotted. According to the initial charge-discharge curve, the discharge specific capacity, denoted as Cm, within the range of 3.5 V to 4.3 V and the total discharge specific capacity, denoted as Cn, within the range of 3.5 V to 4.3 V were recorded, and the Mn³⁺ content was calculated according to Mn³⁺ content=Cm/Cn×100%.

The performance test results of the lithium nickel manganese oxide materials and batteries in Examples 1 to 17 and Comparative Examples 1 to 3 are shown in Table 2.

**[Table 2]**

| | Li₍₁₊ₐ₎(Ni_{0.5}Mn_{1.5})_{(1-a-b-c)}M_{b}N_{c}O₄ | | | | | | | Battery | |
|---|---|---|---|---|---|---|---|---|---|
| | Iₕ/I_{w} | R | Number of Spherical Particles | Total Number of Particles | Proportion n of Spherical Particles (%) | Compaction Density (g/cm³) | Proportion of Mn³⁺ (%) | Discharge Specific Capacity (mAh/g) | Capacity Retention Rate (%) |
| Comparative Example 1 | 0.085 | / | 0 | 208 | 0 | 2.94 | 13.9 | 126.2 | 73 |
| Example 1 | 0.157 | 0.83 | 21 | 136 | 15 | 3.14 | 10.3 | 129.5 | 84 |
| Example 2 | 0.164 | 0.86 | 22 | 139 | 16 | 3.17 | 9.0 | 131.4 | 89 |
| Example 3 | 0.167 | 0.91 | 25 | 143 | 17 | 3.2 | 8.8 | 132.7 | 92 |
| Example 4 | 0.163 | 0.87 | 26 | 155 | 17 | 3.16 | 9.6 | 129.9 | 88 |
| Example 5 | 0.159 | 0.86 | 23 | 153 | 15 | 3.15 | 10.1 | 129.7 | 81 |
| Example 6 | 0.165 | 0.85 | 22 | 136 | 16 | 3.18 | 9.9 | 130.4 | 81 |
| Example 7 | 0.130 | 0.83 | 12 | 134 | 9 | 3.01 | 8.7 | 129.6 | 85 |
| Example 8 | 0.147 | 0.84 | 15 | 127 | 12 | 3.07 | 8.7 | 130.5 | 89 |
| Example 9 | 0.192 | 0.92 | 33 | 157 | 21 | 3.23 | 8.5 | 133.4 | 94 |
| Example 10 | 0.201 | 0.93 | 43 | 164 | 26 | 3.31 | 9.2 | 123.1 | 82 |
| Example 11 | 0.158 | 0.88 | 21 | 122 | 17 | 3.14 | 8.3 | 131.3 | 92 |
| Example 12 | 0.224 | 0.83 | 32 | 139 | 23 | 3.38 | 8.1 | 128 | 82 |
| Example 13 | 0.204 | 0.92 | 24 | 118 | 20 | 3.33 | 8.9 | 128.6 | 84 |
| Example 14 | 0.193 | 0.89 | 25 | 125 | 20 | 3.23 | 8.5 | 129.1 | 85 |
| Example 15 | 0.150 | 0.76 | 16 | 154 | 10 | 3.09 | 8.4 | 127.9 | 81 |
| Example 16 | 0.167 | 0.91 | 31 | 156 | 20 | 3.2 | 8.8 | 131 | 91 |
| Example 17 | 0.162 | 0.78 | 23 | 161 | 14 | 3.16 | 8.8 | 130.5 | 90 |

Conclusion: It can be seen from the comparison between Examples 1 to 17 and Comparative Example 1 that, by controlling the ratio of Iₕ/I_{w} within the above-described range in the present disclosure, the number of spherical particles in the lithium nickel manganese oxide cathode active material can be increased, the compaction density of the lithium nickel manganese oxide cathode active material can be improved, and the discharge specific capacity and cycle capacity retention rate of the battery can be enhanced. This indicates that by controlling the ratio of Iₕ/I_{w} within the above-described range, the energy density and cycle performance of the battery can be improved.

It can be seen from Examples 1 to 5 that, by adjusting the temperature during the annealing process, the proportion of Mn³⁺ can be altered. When T₂=700°C, the proportion of Mn³⁺ was the lowest, and the discharge specific capacity and capacity retention rate of the battery were improved.

It can be seen from the comparison between Example 3 and Example 6 that, as the cooling rate during the cooling stage increases, the proportion of Mn³⁺ increases, leading to a reduction in the discharge specific capacity and capacity retention rate of the battery.

It can be seen from the comparison among Examples 7 to 9 that, by adjusting the doping amount of element M in the lithium nickel manganese oxide cathode active material, the ratio of Iₕ/I_{w} can be adjusted, thereby increasing the compaction density of the lithium nickel manganese oxide cathode active material, and improving the discharge specific capacity and capacity retention rate of the battery. However, when the doping amount of element M was too high (Example 10) and the condition b<c was not satisfied, although the compaction density of the material was improved, the number of truncated octahedrons decreased, resulting in a reduction in the discharge specific capacity and capacity retention rate of the battery.

It can be seen from the comparison between Example 3 and Example 11 that, changing the type of doped element M can also satisfy the ratio requirements of Iₕ/I_{w} and the proportion range of spherical particles, resulting in favorable discharge specific capacity and capacity retention rate of the battery.

It can be seen from the comparison between Example 12 and Example 3 that, without doping of element N, although the ratio requirements of Iₕ/I_{w} and the proportion range of spherical particles were satisfied, the discharge specific capacity and capacity retention rate of the battery were reduced.

It can be seen from Examples 13 and 14 that, increasing the doping amount of element N increased the discharge specific capacity and capacity retention rate of the battery. However, since the condition b<c was not satisfied, the discharge specific capacity and capacity retention rate of the battery were inferior to those of Example 3.

It can be seen from the comparison between Example 15 and Example 3 that, when the c content was too high, the ratio of Iₕ/I_{w} decreased, and the compaction density was reduced, resulting in inferior discharge specific capacity of the battery. In addition, an excessively low proportion of spherical particles reduced the capacity retention rate of the battery, although the capacity retention rate was still higher than that of the comparative example.

It can be seen from the comparison between Example 16 and Example 3 that, changing the type of doped element N can also satisfy the ratio requirements of Iₕ/I_{w} and the proportion range of spherical particles, resulting in favorable discharge specific capacity and capacity retention rate of the battery.

It can be seen from the comparison between Example 17 and Example 3 that, compared with constant-temperature sintering in air, constant-temperature sintering in an oxygen atmosphere resulted in higher roundness and proportion of spherical particles, a slightly better ratio of Iₕ/I_{w}, as well as improved discharge specific capacity and capacity retention rate of the battery.

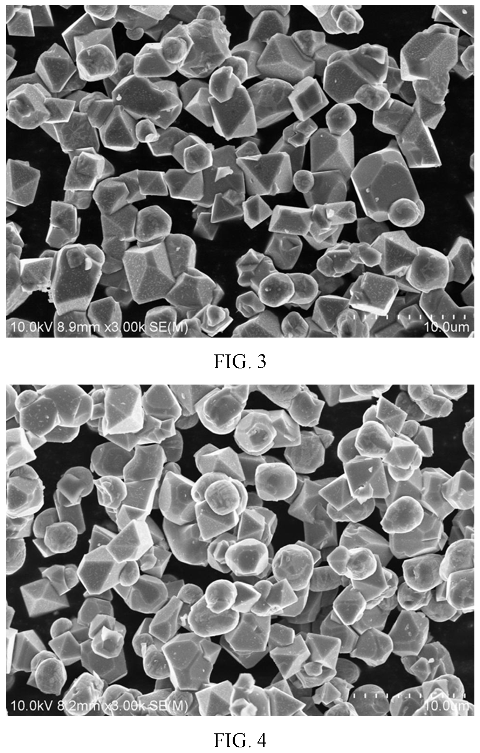

It can be seen from FIG. 2 to FIG. 4 that, the lithium nickel manganese oxide cathode active materials prepared in the Examples of the present disclosure had uniform particles including both spherical particles and truncated octahedral particles.

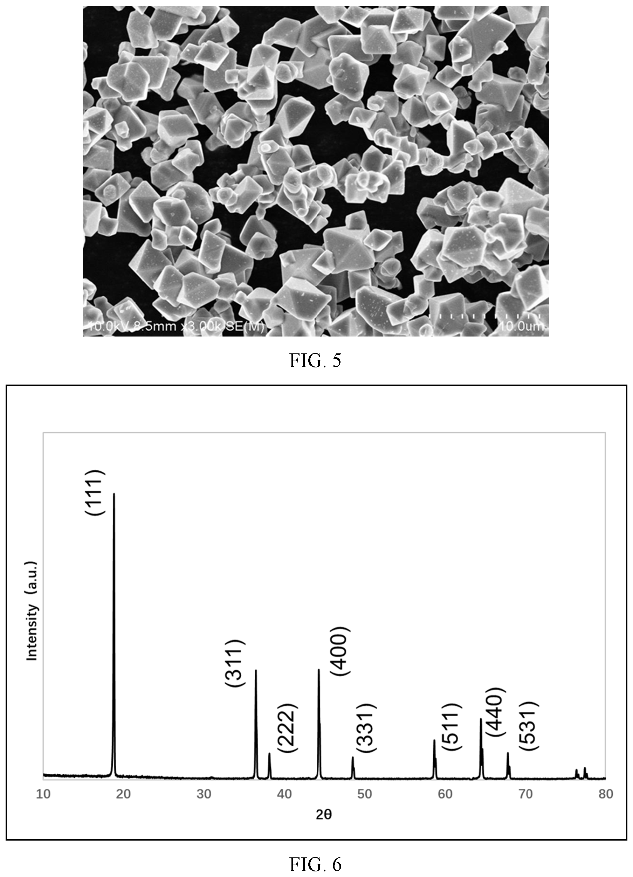

It can be seen from FIG. 5 that, the lithium nickel manganese oxide cathode active material prepared in Comparative Example 1 of the present disclosure exhibited no spherical particle morphology.

In the XRD data shown in FIG. 6, the ratio of Iₕ/I_{w} falls within the protection scope of the present disclosure.

Although the embodiments of the present disclosure have been illustrated and described above, it will be understood that the above embodiments are exemplary only and should not be construed as limiting the scope of the invention. Those skilled in the art may make changes, modifications, substitutions, and variations to the described embodiments without departing from the scope of the present disclosure.

## Claims

1. A lithium nickel manganese oxide cathode active material, wherein an X-ray diffraction pattern of the lithium nickel manganese oxide cathode active material satisfies: $0.13 \leq {I}_{h} / {I}_{w} \leq 0.28 ,$ wherein I_{w}=I₍₁₁₁₎+ I₍₃₁₁₎+ I₍₄₀₀₎ and Iₕ= I₍₃₃₁₎+ I₍₅₁₁₎+ I₍₅₃₁₎, where:
I₍₁₁₁₎ represents a diffraction peak intensity of (111) crystal plane;
I₍₃₁₁₎ represents a diffraction peak intensity of (311) crystal plane;
I₍₄₀₀₎ represents a diffraction peak intensity of (400) crystal plane;
I₍₃₃₁₎ represents a diffraction peak intensity of (331) crystal plane;
I₍₅₁₁₎ represents a diffraction peak intensity of (511) crystal plane; and
I₍₅₃₁₎ represents a diffraction peak intensity of (531) crystal plane.

2. The lithium nickel manganese oxide cathode active material according to claim 1, wherein:
a proportion n of spherical particles in the lithium nickel manganese oxide cathode active material satisfies 10%≤n≤40%; and
a roundness R of the spherical particles satisfies 0.75≤R≤1.

3. The lithium nickel manganese oxide cathode active material according to claim 2, satisfying at least one of the following conditions: $0.9 \leq R \leq 1 ;$ and $15 % \leq n \leq 25 % .$

4. The lithium nickel manganese oxide cathode active material according to any one of claims 1 to 3, comprising Li₍₁₊ₐ₎(Ni_{0.5}Mn_{1.5})_{(1-a-b-c)}M_{b}N_{c}O₄, where:
-0.3≤a≤0.3, 0<b≤0.002, and 0≤c≤0.003;
M comprises at least one of B, W, P, Nb, Mo, Ta, Si, or Ce; and
N comprises at least one of Y, Cr, or Co.

5. The lithium nickel manganese oxide cathode active material according to claim 4, satisfying at least one of the following conditions:
M comprises at least one of B or Nb; and
N comprises Y.

6. The lithium nickel manganese oxide cathode active material according to claim 4, satisfying at least one of the following conditions: $0.0003 \leq b \leq 0.001 ;$ and $0.0005 \leq c \leq 0.0015 and c > b .$

7. The lithium nickel manganese oxide cathode active material according to any one of claims 1 to 3, wherein the lithium nickel manganese oxide cathode active material has a compaction density ranging from 2.9 g/cm³ to 3.4 g/cm³, and optionally, ranging from 3.1 g/cm³ to 3.3 g/cm³.

8. A method for preparing the lithium nickel manganese oxide cathode active material according to any one of claims 1 to 7, the method comprising:
mixing a nickel source, a manganese source, a lithium source, an M source, and an N source in a stoichiometric ratio to obtain a mixture;
heating the mixture to a first temperature for sintering, cooling the mixture to a second temperature for annealing, and cooling, to obtain bulk lithium nickel manganese oxide; and
crushing the bulk lithium nickel manganese oxide.

9. The method according to claim 8, further comprising:
mixing a nickel-manganese precursor, a lithium source, an M source, and an N source in a stoichiometric ratio.

10. The method according to claim 9, wherein the first temperature represented by T₁ and the second temperature represented by T₂ satisfy 250°C≤T₁-T₂ ≤500°C.

11. The method according to claim 10, satisfying at least one of the following conditions: $850 ° C \leq T 1 \leq 1100 ° C ;$ and $600 ° C \leq {T}_{2} \leq 800 ° C .$

12. The method according to claim 8, wherein said cooling the mixture to the second temperature from the first temperature is performed at a cooling rate ranging from 1°C/min to 4°C/min.

13. The method according to claim 12, wherein the mixture is heated to the first temperature and held for a holding time t₁, and wherein the mixture is cooled to the second temperature and held for a holding time t₂,
wherein the method satisfies at least one of the following conditions:
6 hours ≤t₁≤12 hours, optionally 8 hours ≤t₁≤10 hours; and
2 hours ≤t₂≤6 hours, optionally 3.5 hours ≤t₂≤4 hours.

14. The method according to claim 8, wherein the sintering and the annealing are each performed independently in air or in an oxygen atmosphere.

15. The method according to claim 14, wherein the sintering is performed in an oxygen atmosphere.

16. The method according to claim 9, wherein the nickel-manganese precursor satisfies at least one of the following conditions:
3 µm≤Dv50≤5 µm, where Dv50 represents a volume average particle size of nickel-manganese precursor particles; and
0.8≤(Dv90-Dv10)/Dv50≤1.2, where: Dv10 represents a particle size corresponding to 10% of cumulative volume distribution of particles of the nickel-manganese precursor; and Dv90 represents a particle size corresponding to 90% of cumulative volume distribution of particles of the nickel-manganese precursor.

17. A cathode electrode plate, comprising the lithium nickel manganese oxide cathode active material according to any one of claims 1 to 7.

18. A battery, comprising the cathode electrode plate according to claim 17.
